(19) **Europäisches Patentamt**

**European Patent Office**

**Office européen des brevets**

(11) Veröffentlichungsnummer: **0 353 555**
**A2**

(12) **EUROPÄISCHE PATENTANMELDUNG**

(21) Anmeldenummer: **89113410.8**

(22) Anmeldetag: **21.07.89**

(51) Int. Cl.⁴: **G02B 6/44**

(30) Priorität: **03.08.88 DE 3826323**

(43) Veröffentlichungstag der Anmeldung:
**07.02.90 Patentblatt 90/06**

(84) Benannte Vertragsstaaten:
**AT CH DE FR GB IT LI**

(71) Anmelder: **ANT Nachrichtentechnik GmbH**
**Gerberstrasse 33**
**D-7150 Backnang(DE)**

(72) Erfinder: **Lenge, Norbert, Dr.rer.nat.**
**Fliederweg 18**
**D-7592 Renchen(DE)**

(54) Verfahren zur Herstellung einer optischen Hohl- oder Bündelader und optische Hohl- oder Bündelader.

(57) Optische Adern weisen meist Lichtwellenleiter (1) auf, die lose und mit Überlänge in einer Schutzhülle (2) untergebracht sind. Längenänderungen durch Temperaturschwankungen führen zu erhöhten Dämpfungsverlusten, da die thermischen Ausdehnungskoeffizienten von Lichtwellenleiter (1) und Schutzhülle (2) sehr unterschiedlich sind.

Wenn man die Schutzhülle (2) mit einem steifen Stützband (3) wendelförmig umwickelt, verformt sich die Schutzhülle (2) wendelförmig und Schutzhülle (2) und Stützwand (3) sind umeinander gedreht, wodurch eine form- und kraftschlüssige Verbindung entsteht. Das Material des Stützbandes (3) sollte einen Ausdehnungskoeffizienten aufweisen, der dem des Lichtwellenleiters (1) nahezu entspricht. Durch die Biegungen der Schutzhülle (2) wird zusätzlich eine radiale Beweglichkeit des Lichtwellenleiters (1) erzeugt, so daß dieser axiale Längenänderungen der Ader bzw. des Kabels kompensieren kann.

Innenkabel, Kabel mit geringen Außenabmessungen

EP 0 353 555 A2

Verfahren zur Herstellung einer optischen Hohl- oder Bündelader und optische Hohl- oder Bündelader

Die Erfindung betrifft ein Verfahren zur Herstellung einer optischen Hohl- oder Bündelader nach dem Oberbegriff des Patentanspruches 1 und eine optische Hohl- oder Bündelader nach dem Oberbegriff des Patentanspruches 10.

Die Herstellung einer optischen Ader wird in der DE-PS 30 27 743 beschrieben. Bei einem Extrusionsvorgang wird eine Schutzhülle hergestellt, in die mindestens ein Lichtwellenleiter lose und mit Überlänge eingebracht wird. Der verbleibende Zwischenraum wird mit Füllmasse ausgefüllt. Zur Zug- und/oder Druckentlastung werden Elemente in die Schutzhülle eingelegt, indem sie beim Extrusionsprozeß zusammen mit der Schutzhülle aus dem Extruder ausgepreßt werden. Eine andere Möglichkeit besteht darin, die Elemente auf die Schutzhülle aufzuspinnen oder aufzuwickeln und einen zweiten eigentlichen Mantel aufzuextrudieren. Die Elemente sind also immer Teil der Schutzhülle. Die Zahl der Elemente ist entsprechend der gewünschten Festigkeit der Schutzhülle zu wählen, meist wird eine größere Anzahl über den Umfang der Schutzhülle verteilt angeordnet. Der Aderdurchmesser wird dadurch vergrößert, außerdem ist die Ader sehr steif.

Neben der Druck- und Zugbelastung treten noch weitere Belastungen an der Ader auf. Für die Schutzhülle werden Materialien mit einem hohen thermischen Ausdehnungskoeffizienten von ca. 100 $\cdot$ $10^{-6}$/K verwendet.

Der Ausdehnungskoeffizient eines Lichtwellenleiters aus Glas beträgt ca. 0,5 $\cdot$ $10^{-6}$/K. Daher führt eine Temperaturerniedrigung zu einer größeren Überlänge des Lichtwellenleiters in der Schutzhülle, somit zu einer Stauchung des Lichtwellenleiters und zu daraus resultierenden Mikrokrümmungsverlusten. Eine Temperaturerhöhung dagegen führt zu einer Unterlänge des Lichtwellenleiters in der Schutzhülle und somit zu einer Zugbelastung des Lichtwellenleiters. Es kommt zu einer Erhöhung der Dämpfungswerte und unter Umständen zur mechanischen Zerstörung des Lichtwellenleiters im Laufe von einigen Jahren.

Es ist natürlich möglich, die Schutzhülle aus einem Material herzustellen, das einen thermischen Ausdehnungskoeffizienten aufweist, der dem des Lichtwellenleiters nahezu entspricht. Zur Herstellung von Schutzhüllen aus solchen Materialien sind spezielle Maschinen notwendig, herkömmliche Extruder können nicht eingesetzt weden. Metallhüllen müssen verschweißt werden. Sehr dünnwandige Schutzhüllen sind oft nicht herstellbar. Die Herstellung ist aufwendig und die Adern weisen oft nicht die notwendige Flexibilität auf. Aderhüllen aus flüssig-kristallinen Polymeren besitzen zwar einen dem Lichtwellenleiter vergleichbaren Wärmeausdehnungskoeffizienten, doch sind diese Hüllen sehr querdruckempfindlich.

Ein Mantelelement für Lichtwellenleiter mit dem das beschriebene Problem teilweise gelöst wird, wird in der EP 0 110 445 angegeben. Die um zwei Größenanordnungen unterschiedliche thermische Dehnung und Kontraktion von Lichtwellenleiter und Schutzhülle, wird dadurch angeglichen, daß die Schutzhülle form- und kraftschlüssig mit zwei in der neutralen Biegeebene liegenden Längselementen verbunden ist, deren Ausdehnungskoeffizient dem des Lichtwellenleiters entspricht. Zur Herstellung des Formschlusses sind Vorsprünge an der Außenfläche der Längselemente vorgesehen, die sich in die Schutzhülle eindrücken. Es entsteht ein Mantel mit stark unrundem Querschnitt. Einen nahezu runden Querschnitt erhält man, wenn die Schutzhülle Nuten aufweist oder seitlich abgeflacht ist und die Längselemente in den Nuten bzw. an den abgeflachten Seiten angebracht sind. Nur wenn die thermischen Ausdehnungskoeffizienten von Längselementen und Lichtwellenleiter genau gleich sind, erreicht man eine ausreichende Kompensation. Doch ist es oft nicht möglich, diese Gleichheit zu erreichen. Zugentlastungselemente aus glasfaserverstärktem Kunststoff haben beispielsweise einen Ausdehnungskoeffizienten von 7 $\cdot$ $10^{-6}$/K. Außerdem ist es bei der in der EP 0 110 445 vorgeschlagenen Lösung von Nachteil, daß eine neutrale Biegeebene bestimmt werden muß. Die Ader ist sehr steif, und die Herstellung der Längselemente mit Vorsprüngen und der Schutzhülle mit Nuten ist aufwendig.

Der Erfindung liegt die Aufgabe zugrunde, ein Verfahren zur Herstellung einer optischen Hohl- oder Bündelader anzugeben, das mit einfachen Mitteln durchführbar ist und gewährleistet, daß in einem großen Temperaturbereich keine zusätzlichen Dämpfungsverluste durch die unterschiedliche thermische Dehnung von Schutzhülle und Lichtwellenleiter auftreten. Außerdem ist es Aufgabe der Erfindung, eine optische Hohl- oder Bündelader mit obiger Eigenschaft anzugeben.

Die Aufgabe wird gelöst durch ein Verfahren mit den Merkmalen des Patentanspruches 1 und eine optische Hohl-oder Bündelader mit den Merkmalen des Patentanspruches 10.

Vorteilhafte Weiterbildungen werden bezüglich des Verfahrens in den Ansprüchen 2 bis 9 und bezüglich der Ader in den Ansprüchen 11 bis 18 angegeben.

Beim erfindungsgemäßen Verfahren wird um eine Schutzhülle, die Aderhülle, in der sich mindestens ein Lichtwellenleiter lose befindet, ein Stützband wendelförmig gelegt. Der Lichtwellenleiter ist in einem mittleren Betriebstemperaturbereich vorteilhafter Weise mit einer Überlänge von ungefähr 1 % in der Schutzhülle untergebracht. Zum Aufwikkeln des Stützbandes wird nur ein Wickler, aber keine Verseilmaschine benötigt. Das Stützband sollte aus einem Material mit im Vergleich zur Schutzhülle hoher Steifigkeit, also hohem Biege-Elastizitätsmodul, und mit einem thermischen Ausdehnungskoeffizienten, der dem des Lichtwellenleiters möglichst gut entspricht, bestehen. Das Stützband soll Druck- und Zugbelastungen aufnehmen.

Die Ganghöhe der Wendel, in der das Stützband um die Schutzhülle gelegt wird, ist so gewählt, daß die Oberfläche der Schutzhülle nicht ganz bedeckt ist. Dadurch erreicht man, daß die Ader flexibel und leicht handhabbar ist. Da der Biege-Elastizitätsmodul des Stützbandes groß gegen den der Schutzhülle ist, das Stützband also eine hohe Steifigkeit aufweist und dazu tendiert, die durch das Wickeln entstandenen Biegungen wieder zu begradigen, wird die Schutzhülle mit Lichtwellenleiter wendelförmig deformiert. Man erhält eine Ader, bei der Schutzhülle und Stützband umeinander gewickelt sind, d.h., weder die Lage des Stützbandes noch die der Schutzhülle entsprechen einer axialen Geraden. Um einen guten Kontakt zwischen Stützband und Schutzhülle zu gewährleisten, kann über das Stützband ein Haltegarn gelegt werden. Ein Form- und Kraftschluß ist mit einfachen Mitteln und ohne besondere Ausgestaltung der einzelnen Elemente erreicht worden. Das Festlegen einer neutralen Biegeebene ist nicht notwendig. Es sind keine besonderen Maschinen notwendig, um die Ader herzustellen, wie dies beispielsweise der Fall ist, wenn man Zugentlastungselemente bei der Extrusion in die Schutzhülle einlagern will. Dadurch, daß die Schutzhüllenachse nicht koaxial zur Wendelachse des Stützbandes liegt, sondern ebenfalls wendelförmig verformt ist, kann eine geringe relative Längenänderung, z.B. durch eine Temperaturänderung, ohne Belastung des bzw. der Lichtwellenleiter und somit ohne zusätzliche Dämpfungsverluste kompensiert werden. Durch die wendelförmig gekrümmte Form der Schutzhülle ist die Beweglichkeit der Lichtwellenleiter in der Schutzhülle größer geworden. Beispielsweise bei Verlängerung der Ader durch Zug- oder Temperaturerhöhung ist ein Wandern der oder des Lichtwellenleiters zur Wendelachse hin möglich. Entsprechendes gilt bei Temperaturerniedrigung oder Druckkräften auf die Schutzhülle, denn die oder der Lichtwellenleiter hat/haben die Möglichkeit von der axialen Geraden wegzuwandern.

Die Kompensation der relativen Längenänderung setzt sich also aus zwei Mechanismen zusammen:

1. Aus der Verminderung der Längenausdehnung der Schutzhülle, durch den Form- und Kraftschluß mit dem Stützband, dessen thermischer Ausdehnungskoeffizient dem des Lichtwellenleiters in etwa entspricht und

2. aus der möglichen Kompensation einer verbleibenden geringen relativen Längenänderung zwischen Schutzhülle und Lichtwellenleiter durch die wendelförmige Verformung der Schutzhülle, die ein Wandern des oder der Lichtwellenleiter in radialer Richtung zur Kompensation von Längenänderungen in axialer Richtung ermöglicht.

Der Temperaturgang der erfindungsgemäßen Ader ist sehr gut. Die erfindungsgemäße Ader weist keinen runden Querschnitt auf. Bei der Herstellung von Kabeln kann dies durch längseinlaufende Aramid- oder Glasgarne, die eine zusätzliche Zugentlastung darstellen, ausgeglichen werden. Ein äußerer Mantel kann aufgebracht werden, um die Ader vor Umwelteinflüssen zu schützen. Das Stützband, das beim erfindungsgemäßen Verfahren verwendet wird, kann aus Metall oder aus Kunststoff oder aus glasfaserverstärktem Kunststoff bestehen. Auch ein einzelnes oder mehrere einzelne Elemente aus glasfaserverstärktem Kunststoff können als Stützband verwendet werden. Dabei ist darauf zu achten, daß mehrere Elemente dicht nebeneinander liegen, also wie ein einziges Band wirken. Dies kann erreicht weden, indem man die Elemente miteinander verbindet. Es ist aber auch möglich, die einzelnen Elemente ohne Rückdrehung aufzuwickeln. Die Elemente sind dann tordiert und rutschen durch die Torsionskräfte derart gegeneinander, daß sich ein bandförmiges Element bildet. Durch die Verwendung des Stützbandes und das Verdrillen des Stützbandes mit der Schutzhülle entsteht eine flexible Ader von geringen Querabmessungen, die eine Zug- und Druckentlastung aufweist.

Zur Verformung der Schutzhülle kann es entweder dadurch kommen, daß das Stützband sich aufgrund seiner Steifigkeit zu begradigen versucht, oder dadurch, daß das Stützband in warmem Zustand aufgewickelt wurde und sich beim Abkühlen zusammenzieht. Eine weitere Möglichkeit wäre das Bewickeln einer kalten Schutzhülle, die sich beim Erwärmen ausdehnt und somit verformt. Es ist allerdings aufwendiger mit Erwärmung und Abkühlung zu arbeiten.

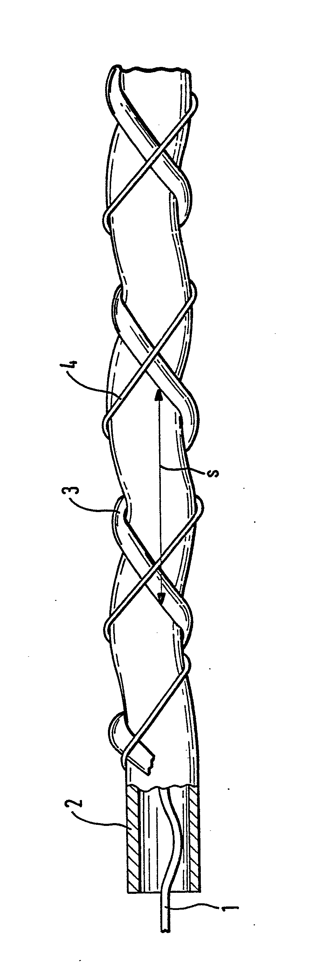

Anhand der Zeichnung wird ein Ausführungsbeispiel der Erfindung erläutert.

In der Figur ist eine erfindungsgemäße Ader in Längsrichtung gestaucht dargestellt. Ein Lichtwellenleiter 1 befindet sich lose in einer Schutzhülle 2. Der Lichtwellenleiter 1 weist gegenüber der Schutzhülle 2 eine Überlänge auf. Die Schutzhülle 2 kann beispielsweise auf den Lichtwellenleiter 1 aufextrudiert werden. Der Freiraum zwischen Lichtwellenleiter 1 und Schutzhülle 2 ist mit einer Füllmasse ausgefüllt, die für die Längswasserdichtigkeit der Ader sorgt. Der thermische Ausdehnungskoeffizient des Lichtwellenleiters beträgt 0,5 ·

$10^{-6}$/K, während der der Schutzhülle $100 \cdot 10^{-6}$/K beträgt. Zum Ausgleich ist auf die Schutzhülle 2 ein Stützband 3 aus glasfaserverstärktem Kunststoff, der einen thermischen Ausdehnungskoeffizienten von $7 \cdot 10^{-6}$/K aufweist, kraft- und formschlüssig gewickelt. Der glasfaserverstärkte Kunststoff ist sehr steif, der Biege-Elastizitätsmodul beträgt 50 kN/mm², während der des Materials der Schutzhülle 2 kN/mm², beträgt. Diese Steifigkeit bewirkt eine wendelförmige Verformung der Schutzhülle 2. Stützband 3 und Schutzhülle 2 sind umeinander gewendelt. Die Ganghöhe S des Stützbandes 3 ist so gewählt, daß die Oberfläche der Schutzhülle 2 nicht vollständig abgedeckt ist. Ein Haltegarn 4 ist um Schutzhülle 2 und Stützband 3 gewickelt.

Die Ganghöhe S der Wendel, in der das Stützband um die Schutzhülle gelegt ist, wird vom im Einsatzfall auftretenden minimalen Biegeradius bestimmt. Die minimalen Biegeradien ermitteln sich wiederum aus dem Kabeldurchmesser. Der minimale Biegeradius ist etwa gleich dem 7,5-fachen Kabeldurchmesser. Kabel, bei denen solche speziellen temperaturstabilisierten Adern eingesetzt werden, haben als Außendurchmesser etwa den 2- bis 3-fachen Aderdurchmesser, womit man also im allgemeinen auf minimale Biegeradien von ca. 50 mm kommt. Bei einer 360°-Biegung des Kabels sollte das Stützband auf seiner Ober- und Unterseite zumindest eine Zug- und eine Druckzone aufweisen, d.h., die Ganghöhe S darf maximal ca. 300 mm betragen. Das Verhältnis von Ganghöhe S zum Durchmesser der Schutzhülle sollte also etwa 100:1 sein. Auch ein Verhältnis von 50:1 zwischen Ganghöhe S und Durchmesser der Schutzhülle ist vorstellbar. Der Verseilkrümmungsradius der Schutzhülle darf minimal 50 mm betragen. Ist er kleiner kommt es zu Makrokrümmungsverlusten im Lichtwellenleiter.

Eine erfindungsgemäße Ader wird zweckmäßig bei Innenkabeln und Kabeln mit geringen Außenabmessungen angewendet.

## Ansprüche

1. Verfahren zur Herstellung einer optischen Hohl- oder Bündelader mit einem auf die Aderhülle gewickelten Stützband (3) zur Zug- und Druckentlastung, dadurch gekennzeichnet,

a) daß für das Stützband (3) ein Material verwendet wird, das im Vergleich zur Steifigkeit der Schutzhülle (2), eine große Steifigkeit aufweist, und das einen thermischen Ausdehnungskoeffizienten aufweist, der sich von dem des/jedes Lichtwellenleiters (1) nur wenig unterscheidet, so daß bei Temperaturänderung die Längenausdehnung der Schutzhülle (2) durch den Form- und Kraftschluß mit dem Stützband (3) vermindert wird,

b) und daß das Stützband (3) mit einer so großen Ganghöhe auf die Schutzhülle (2) aufgewickelt wird, daß die Oberfläche der Schutzhülle (2) nicht vollständig abgedeckt ist, und Schutzhülle (2) und Stützband (3) wendelförmig umeinander verlaufen.

2. Verfahren nach Anspruch 1, dadurch gekennzeichnet, daß als Stützband (3) ein Metallband, insbesondere aus einem Stahlwerkstoff, beispielsweise Invar-Stahl, verwendet wird.

3. Verfahren nach Anspruch 1, dadurch gekennzeichnet, daß als Stützband (3) ein Kunststoffband aus flüssigkristallinen Polymeren verwendet wird.

4. Verfahren nach Anspruch 1, dadurch gekennzeichnet, daß als Stützband (3) mindestens ein Element aus glasfaserverstärktem Kunststoff verwendet wird.

5. Verfahren nach Anspruch 4, dadurch gekennzeichnet, daß als Stützband (3) mehrere Elemente aus glasfaserverstärktem Kunststoff verwendet werden, die fest miteinander verbunden sind oder die ohne Rückdrehung einzeln auf die Schutzhülle (2) aufgewickelt werden und aufgrund der Torsionskräfte zu einem bandförmigen Verbund zusammenrutschen.

6. Verfahren nach einem der vorhergehenden Ansprüche, dadurch gekennzeichnet, daß das Stützband (3) mit Haltegarn (4) festgelegt wird.

7. Verfahren nach einem der vorhergehenden Ansprüche, dadurch gekennzeichnet, daß das Stützband (3) derart aufgewickelt wird, daß der Verseilkrümmungsradius der Schutzhülle (2) größer als 50 mm ist.

8. Verfahren nach einem der vorhergehenden Ansprüche, dadurch gekennzeichnet, daß das Stützband (3) derart aufgewickelt wird, daß die Ganghöhe größer als der 50-fache Durchmesser der Schutzhülle (2) ist.

9. Verfahren nach einem der vorhergehenden Ansprüche, dadurch gekennzeichnet, daß das Stützband (3) derart aufgewickelt wird, daß das Verhältnis Ganghöhe zum Durchmesser der Schutzhülle (2) ungefähr 100:1 beträgt.

10. Optische Hohl- oder Bündelader mit einem auf die Aderhülle gewickelten Stützband zur Zug- und Druckentlastung, dadurch gekennzeichnet,

a) daß das Stützband (3) im Vergleich zur Steifigkeit der Schutzhülle (2) eine hohe Steifigkeit aufweist und aus einem Material besteht, dessen thermischer Ausdehnungskoeffizient dem des Lichtwellenleiters (1) nahezu entspricht und

b) daß das Stützband (3) ist auf die Schutzhülle (2) gewickelt, wobei die Ganghöhe der dadurch gebildeten Wendel so groß ist, daß die Oberfläche der Schutzhülle (2) nicht vollständig abgedeckt ist und Stützband (3) und Schutzhülle (2) wendelförmig umeinander verlaufen.

11. Optische Hohl- oder Bündelader nach Anspruch 10, dadurch gekennzeichnet, daß die Ader ein Haltegarn (4) aufweist, mit dem das Stützband (3) fixiert ist.

12. Optische Hohl- oder Bündelader nach einem der Ansprüche 10 oder 11, dadurch gekennzeichnet, daß das Stützband (3) aus Metall besteht, insbesondere aus Invar-Stahl.

13. Optische Hohl- oder Bündelader nach einem der Ansprüche 10 oder 11, dadurch gekennzeichnet, daß das Stützband (3) aus flüssig-kristallinen Polymeren besteht.

14. Optische Hohl- oder Bündelader nach einem der Ansprüche 10 oder 11, dadurch gekennzeichnet, daß das Stützband (3) aus mindestens einem Element aus glasfaserverstärktem Kunststoff besteht.

15. Optische Hohl- oder Bündelader nach Anspruch 14, dadurch gekennzeichnet, daß das Stützband (3) aus mehreren Elementen aus glasfaserverstärktem Kunststoff besteht, die fest miteinander verbunden sind, oder die ohne Rückdrehung einzeln auf die Schutzhülle (2) aufgewickelt sind und aufgrund der Torsionskräfte einen bandförmigen Verbund bilden.

16. Optische Hohl- oder Bündelader nach einem der Ansprüche 10 bis 15, dadurch gekennzeichnet, daß der Verseilkrümmungsradius der Schutzhülle größer als 50 mm ist.

17. Optische Hohl- oder Bündelader nach einem der Ansprüche 10 bis 16, dadurch gekennzeichnet, daß die Ganghöhe mindestens 50-mal größer als der Durchmesser der Schutzhülle ist.

18. Optische Hohl- oder Bündelader nach einem der Ansprüche 10 bis 17, dadurch gekennzeichnet, daß das Verhältnis Ganghöhe der Wendel, die das Stützband (3) darstellt, zum Durchmesser der Schutzhülle (2) ungefähr 100:1 ist.